(19) Europäisches Patentamt
European Patent Office
Office européen des brevets

(11) **EP 3 510 368 B1**

(12) **EUROPÄISCHE PATENTSCHRIFT**

(45) Veröffentlichungstag und Bekanntmachung des Hinweises auf die Patenterteilung:
**04.11.2020 Patentblatt 2020/45**

(21) Anmeldenummer: **17767772.1**

(22) Anmeldetag: **06.09.2017**

(51) Int Cl.:
*G01G 23/01* (2006.01)   *G01G 7/04* (2006.01)

(86) Internationale Anmeldenummer:
**PCT/EP2017/072382**

(87) Internationale Veröffentlichungsnummer:
**WO 2018/046557 (15.03.2018 Gazette 2018/11)**

(54) **EINRICHTUNG UND VERFAHREN ZUR AUTOMATISCHEN KALIBRIERUNG DER AUSLENKUNG DER WAAGSCHALE EINER WAAGE MIT ELEKTROMAGNETISCHER KRAFTKOMPENSATION**

APPARATUS AND METHOD FOR AUTOMATIC CALIBRATION OF THE DEFLECTION OF THE PAN OF A BALANCE HAVING ELECTROMAGNETIC FORCE COMPENSATION

DISPOSITIF ET PROCÉDÉ POUR ÉTALONNER AUTOMATIQUEMENT LE DÉBATTEMENT DU PLATEAU D'UNE BALANCE À COMPENSATION ÉLECTROMAGNÉTIQUE DES FORCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.09.2016   DE 102016010899**

(43) Veröffentlichungstag der Anmeldung:
**17.07.2019   Patentblatt 2019/29**

(73) Patentinhaber: **Technische Universität Ilmenau**
**98683 Ilmenau (DE)**

(72) Erfinder:
• **FRÖHLICH, Thomas**
**98693 Ilmenau (DE)**
• **RAHNEBERG, Ilko**
**98694 Ilmenau OT Gehren (DE)**
• **HILBRUNNER, Falko**
**98693 Ilmenau (DE)**
• **SCHLEICHERT, Jan**
**73540 Heubach (DE)**

(74) Vertreter: **Kailuweit & Uhlemann Patentanwälte Partnerschaft mbB**
**Bamberger Straße 49**
**01187 Dresden (DE)**

(56) Entgegenhaltungen:
**JP-A- 2006 184 192**

**Beschreibung**

Die vorliegende Erfindung betrifft eine Einrichtung und ein Verfahren zur automatischen Kalibrierung der Auslenkung der Waagschale einer Waage mit elektromagnetischer Kraftkompensation (im Folgenden nur noch EMK-Waage genannt). Bei EMK-Waagen nach dem Stand der Technik wird die auf eine Waagschale wirkende Gewichtskraft des Wägegutes durch eine elektromagnetische Gegenkraft kompensiert. Schon die Druckschrift DE 865 215 B beschreibt eine elektrische Präzisionswaage nach diesem Funktionsprinzip. Die elektromagnetische Gegenkraft wird durch eine stromdurchflossene Spule, die in einem Permanentmagnetfeld angeordnet ist, erzeugt und optional durch ein mechanisches Hebelwerk über- oder untersetzt. Die Auslenkung der Spule oder des Übersetzungshebels wird mit einem Lageindikator mit hoher Wegauflösung erfasst. Mittels eines Reglers wird der Strom durch die Spule des elektromagnetischen Aktors nachgestellt, bis die Auslenkung am Lageindikator auf Null gestellt ist. Die dazu nötige Kompensationskraft ist über die Motorkonstante des Spulensystems proportional zu dem Strom. Diese Motorkonstante wird oft auch als Koppelfaktor bezeichnet. Somit ergibt sich für die auf der Waagschale zu messende Kraft ein linearer Zusammenhang zum leicht messbaren Spulenstrom. Der Proportionalitätsfaktor hängt von der Motorkonstante und den Hebelverhältnissen des zur Krafteinleitung und Kraftübersetzung verwendeten mechanischen Systems ab.

In elektromagnetisch kraftkompensierten Waagen wird zur Detektion der Lage des Wägebalkens bzw. des Übersetzungshebels in der Regel eine Schlitzblende als beweglicher Teil an diesem befestigt, welche sich relativ zwischen der ortsfesten Beleuchtung und der ortsfesten Differenzfotodiode bewegt. Diese Art der optischen Lagemessung wird beispielsweise in der Druckschrift Diethold, C., Fröhlich, T., Hilbrunner, F., Jäger, G.: High precision optical sensor for electromagnetic force compensated balances, Proc. IMEKO TC3, TC5, TC22 Conf. (2010) beschrieben und auch die rückführbare Ermittlung der Weg-Kennlinie des Lageindikators mittels eines Laserinterferometes. Die Druckschrift Picard, A.: The BIPM flexure-strip balance FB-2, Metrologia 41 (2004) 319-329 beschreibt eine spezielle Ausführungsform eines optischen Lageindikators unter Verwendung einer Zylinderlinse als beweglicher Teil. In der Druckschrift US 4,825,968 A wird eine besondere Ausführungsform eines optischen Positionsdetektors in einer EMK Waage offenbart.

Die Druckschrift EP 0 241 649 A2 offenbart die Verwendung eines kapazitiven Positionsdetektors an einer elektromagnetisch kraftkompensierenden Waage zur Erfassung ihrer Gleichgewichtslage. Der bewegliche Teil des Positionsdetektors ist hier als Elektrode eines Kondensators ausgeführt.

Die Verwendung optischer oder kapazitiver Wegmesssysteme als Lageindikatoren in EMK-Waagen nach dem Stand der Technik ist für die Erfassung der Lage und die Einstellung der Nulllage des Wägebalkens sehr gut geeignet, erlaubt jedoch nicht die rückführbare Messung der Position als Längenmessung des Auslenkungsweges mit der Einheit Meter. Die rückführbare Messung der Auslenkung des Wägebalkens oder der Waagschale ist aber für die mechanische Charakterisierung der EMK-Waage, beispielsweise die präzise Ermittlung einer mechanischen Federsteifigkeit des Hebelwerkes interessant. Weiterhin gibt es viele Anwendungen von EMK-Waagen wo die rückführbare Messung der Auslenkung der Waagschale erforderlich ist.

Die Druckschrift DE 10 2011 111 238 A1 offenbart ein Verfahren und eine Vorrichtung zur Vorgabe von Kraft-Weg-Kennlinien mit einer vorteilhaften Ausführungsform unter Verwendung eines Wägesystems nach dem Prinzip der elektromagnetischen Kraftkompensation als Stellglied der Vorrichtung. Mit dem dort beschriebenen Verfahren und der Anordnung ist eine hochgenaue Positionierung und gleichzeitig die Vorgabe von Kraft-Weg-Kennlinien möglich. Um die Kraft-Weg-Kennlinien bzw. Federkonstanten metrologisch rückführbar ermitteln bzw. vorgeben zu können, muss dort jedoch zusätzlich zur Erfassung der Hebelposition durch den im EMK-System integrierten Positionssensor die Position der dort als Messtisch bezeichneten Waagschale mit einem Laserinterferometer direkt gemessen werden beziehungsweise der Positionssensor durch ein Interferometer oder ein anderes dann jedoch aufwendig rückführbar kalibriertes, langzeitstabiles Wegmesssystem ersetzt werden. In der Druckschrift Diethold, et.al. Nanopositioning system with combined force measurement based on electromagnetic force compensated balances Proc. XX IMEKO World Congress, (2012) wird die Verwendung einer EMK-Waage als Nanopositioniersystem mit Kraftmessungsmöglichkeit und die Verwendung eines Laserinterferometers zur Wegmessung beschrieben. Nachteilig an der zusätzlichen Verwendung von Laserinterferometern zur Wegmessung der Auslenkung der Waagschale ist der erhebliche Kostenaufwand. Durch die Messung der Auslenkung mit Laserinterferometern können unerwünschte Messfehler auftreten, weil es schwierig ist, die Messrichtung des Interferometers und die Bewegungsrichtung der Waagschale exakt fluchtend auszurichten. Weiterhin sind Interferometer sehr empfindliche und anfällige Messinstrumente die typischerweise nur unter Laborbedingungen einsetzbar sind.

Schließlich ist aus der Druckschrift DE 199 60 418 A1 eine Vorrichtung zur automatischen Kalibrierung und Linearisierung der Kraftkennlinie einer EMK-Waage bekannt, wobei dies mit einem eingebauten Justiergewicht und mittels einer über einen Messwiderstand abfallenden Spannung realisiert wird.

Aufgabe der Erfindung ist es, die Nachteile aus dem Stand der Technik zu überwinden und eine Einrichtung und ein Verfahren zur automatischen Kalibrierung der Auslenkung der Waagschale einer EMK-Waage bereitzustellen.

Diese Aufgabe wird mit den in den Patentansprüchen 1 und 5 aufgeführten Merkmalen gelöst.

Die Einrichtungen und Verfahren zur automatischen Kalibrierung der Auslenkung der Waagschale einer EMK-Waage zeichnen sich insbesondere durch eine automatische Kalibrierung der Auslenkung der Waagschale aus.

Dazu umfasst die EMK-Waage, die eine Krafteinleitungseinheit mit Waagschale, ein Hebelsystem, einen elektrodynamischen Aktor mit mindestens einer Spule und einem magnetfelderzeugenden System und einen Lageindikator aufweist,

- einen Messwiderstand zur Messung des Stromes durch die Spule des elektrodynamischen Aktors ist,
- ein Justiergewicht,
- eine Einrichtung zur Vorgabe elektrischer Ströme oder elektrischer Spannungen,
- einen Taktgenerator zur Bereitstellung zeitlicher Impulse,
- eine Einrichtung zur dreikanaligen simultanen Spannungsmessung und
- eine Signalverarbeitungs- und Regeleinheit.

Dabei ist die Einrichtung zur dreikanaligen simultanen Spannungsmessung dafür ausgebildet, die über die mindestens eine Spule des elektrodynamischen Aktors abfallende Spannung $U_{Sp}$, die über dem Messwiderstand abfallende Spannung $U_{Ref}$ und die Ausgangsspannung des Lageindikators $U_x$ zeitsynchron und in vorbestimmten Zeitintervallen zu erfassen und an die Signalverarbeitungs- und Regeleinheit zu übertragen.

Ein Verfahren zur automatischen Kalibrierung der Auslenkung der Waagschale einer EMK-Waage erfolgt mit folgenden Schritten:

- Einstellung der Lage eines Hebelsystems der EMK-Waage durch gezielte Bestromung mindestens einer Spule eines elektrodynamischen Aktors derart, dass ein Lageindikator ein stationäres Nullsignal ausgibt und der zugehörige stationäre Strom $I_{stat1}$ durch die Spule des elektrodynamischen Aktors in einer Signalverarbeitungs- und Regeleinheit erfasst wird,
- Beaufschlagung der EMK-Waage mit einem Justiergewicht und Einregelung der Lage des Hebelsystems der EMK-Waage derart, dass der Lageindikator ein stationäres Nullsignal ausgibt und der zugehörige stationäre Strom $I_{stat2}$ durch die Spule des elektrodynamischen Aktors in der Signalverarbeitungs- und Regeleinheit erfasst wird,
- Ermittlung des Koppelfaktors des elektrodynamischen Aktors zwischen dem Strom durch die Spule des elektrodynamischen Aktors und der resultierenden Kraft an der Waagschale der EMK-Waage aus den erfassten stationären Strömen $I_{stat1}$ und $I_{stat2}$, der Masse des Justiergewichts $m_{just}$ und der lokalen Erdbeschleunigung g,
- zeitlich veränderliche Auslenkung der in Nulllage eingeregelten unbelasteten EMK-Waage mit einem definierten Erregungssignal und zeitsynchrone Erfassung der über der Spule des elektrodynamischen Aktors abfallenden Spannung $U_{Sp}$, der über einem Messwiderstand $R_{Ref}$ zur Messung des Stromes durch die Spule des elektrodynamischen Aktors abfallenden Spannung $U_{Ref}$ und der Ausgangsspannung des Lageindikators $U_x$ in definierten Zeitintervallen, und
- Übermittlung der erfassten Spannungen $U_{Sp}$, $U_{Ref}$ und $U_x$ zur Signalverarbeitungs- und Regeleinheit und Ermittlung der Kennlinie der Auslenkung der Waagschale der EMK-Waage in Abhängigkeit von der erfassten Ausgangsspannung des Lageindikators $U_x$.

Die jeweilige Signalverarbeitungs- und Regeleinheit kann dazu vorteilhafterweise ein Datenverarbeitungssystem sein.

Der Lageindikator der EMK-Waage kann ein optisches oder kapazitives Wegmesssystem mit nichtlinearer Kennlinie sein.

Nach einer vorteilhaften Ausgestaltung ist der Taktgenerator zur Bereitstellung zeitlicher Impulse dafür ausgebildet, eine dreikanalige simultane Spannungsmessung in von der Signalverarbeitungs- und Regeleinheit vorgegebenen Zeitintervallen auszulösen.

Nach einer weiteren Ausgestaltung ist die Einrichtung zur Vorgabe elektrischer Ströme oder elektrischer Spannungen mindestens zweikanalig ausgebildet. Mindestens ein erster Kanal generiert differentielle Gleichsignale und mindestens ein zweiter Kanal differentielle Wechselsignale.

Vorteilhafterweise wird für die Ermittlung der Kennlinie der Auslenkung der Waagschale der EMK-Waage in Abhängigkeit von der erfassten Ausgangsspannung des Lageindikators $U_x$ die in der mindestens einen Spule des elektrodynamischen Aktors bewegungsinduzierte Spannung $U_{ind}$ durch phasenrichtige Zerlegung der erfassten Spannungen $U_{Sp}$, $U_{Ref}$ und $U_x$ bestimmt.

Die zeitlich veränderliche Auslenkung der Waagschale der EMK-Waage kann durch mindestens ein harmonisches Signal mit definierter Frequenz und definierter Amplitude realisiert werden.

Dazu können die Signale aus den Spannungsmessungen der harmonischen Auslenkung durch ein analytisches Modell approximiert werden und die Modellparameter Offset, Amplitude und Phasenlage ermittelt werden, wobei die Frequenz durch Taktgenerator zur Bereitstellung zeitlicher Impulse bekannt ist, und alle weiteren Berechnungsschritte analytisch mit den ermittelten Modellparametern realisiert werden.

Weiterhin kann aus den erfassten Spannungen $U_{Sp}$, $U_{Ref}$ und $U_x$ der Impedanzfrequenzgang der EMK-Waage berechnet, durch ein parametrisches Modell des Impedanzfrequenzganges approximiert und aus dem parametrischen Modell die Kennlinie der Auslenkung der Waagschale der EMK-Waage in Abhängigkeit von der erfassten Ausgangsspannung des Lageindikators Ux ermittelt werden.

Die Erfindung wird im Folgenden anhand von prinzipiellen Zeichnungen näher beschrieben.

Es zeigen:

Fig. 1    ein schematischer Aufbau einer EMK-Waage nach dem Stand der Technik,

Fig. 2    ein systemtheoretisches Modell einer EMK-Waage,

Fig. 3    ein systemtheoretisches Modell der elektrischen Impedanz einer EMK-Waage,

Fig. 4    eine Darstellung der Addition der komplexen Spannungsteile der Aktorspulen-Spannung als Zeigerdiagramm (Wechselstromrechnung) und

Fig. 5    eine Messanordnung zur phasenrichtigen Erfassung der Signale.

Mit der vorliegenden Erfindung werden eine Einrichtung und ein Verfahren zur automatischen Kalibrierung der Auslenkung der Waagschale einer EMK-Waage vorgestellt und zusammen näher beschrieben.

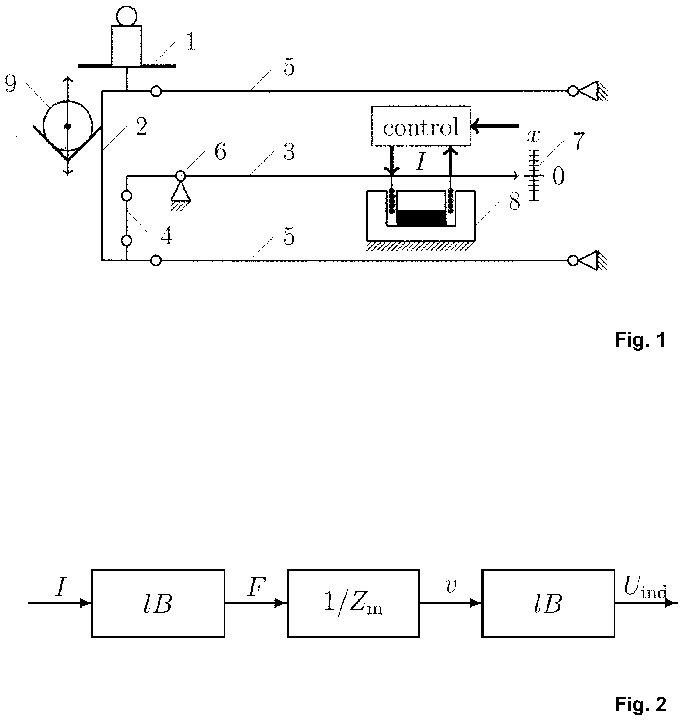

Der Aufbau einer klassischen EMK-Waage ist in Fig. 1 schematisch dargestellt. Dabei bezeichnet 1 die Waagschale. Bezugszeichen 2 stellt den Waagschalenhalter dar, der häufig auch als Koppelstück bezeichnet wird und in Verbindung mit den beiden Parallellenkern 5 als Krafteinleitungssystem dient. Der Hebel 3 ist im Hebellager 6 gelagert und über das Koppelband 4 mit dem Waagschalenhalter 2 verbunden. Das Spule-Permanentmagnet-System (elektrodynamischer Aktor) 8 erzeugt die Kompensationskraft mittels des von einer nicht dargestellten Reglereinheit eingestellten Stromes $I$. Die Reglereinheit kann dazu ein bekanntes Datenverarbeitungssystem und insbesondere ein Mikrocontroller sein. Der Lageindikator 7 dient zur Erfassung der Lage des Hebels 3. Die Massenstücke (9a, 9) können auf die Waagschale manuell abgesetzt oder auf eine zusätzliche Halterung mittels einer Lastwechselvorrichtung automatisch aufgelegt werden.

Die erfindungsgemäße automatische Kalibrierung der Auslenkung der Waagschale einer EMK-Waage basiert auf einer rein elektrischen, frequenzabhängigen Messung von Strom und Spannung an der Spule einer EMK-Waage unter Zuhilfenahme eines Referenzgewichtes (Justiergewichtes) bekannter Masse $m_{Just}$ und der Ausgangsspannung $U_x$ des Lageindikators der EMK-Waage. Die EMK-Waage kann auch ohne Waagschale oder mit demontierter Waagschale betrieben werden, dann bezieht sich die Beschreibung auf die Bewegung und Auslenkung des Waagschalenhalters. Dieser Waagschalenhalter wird häufig auch als Koppelstück bezeichnet.

Der Zusammenhang zwischen der bewegungsinduzierten Spannung der Spule $U_{ind}$ und der zugehörigen Geschwindigkeit der Waagschale $v_{WS}$ ist über den Koppelfaktor $B*L$ gegeben. Es gilt:

$$U_{ind}=v_{WS}*B*L \qquad (1)$$

Zur Ermittlung des Koppelfaktors $B*L$ wird das stationär eingeregelte Wägesystem mit dem Justiergewicht belastet. Der zum Tragen des Justiergewichtes notwendige Spulenstrom $I_{Dc}$ ist proportional zur Gewichtskraft des Justiergewichtes

$$F_{Just} = I_{Dc}*B*L = g*m_{Just}. \qquad (2)$$

Mit dem bekannten Wert der örtlichen Erdbeschleunigung g, der bekannten Masse $m_{Just}$ und dem gemessenen Spulenstrom $I_{Dc}$ kann der Koppelfaktor $B*L$ nach Gleichung (3) ermittelt werden:

$$B*L = g*m_{Just} / I_{Dc} \qquad (3)$$

Hierbei ist zu beachten, dass der so ermittelte Koppelfaktor B*L nicht der reale Koppelfaktor des Spule-Permanentmagnet-Systems ist. Ermittelt wurde ein wirksamer Koppelfaktor, welcher den Zusammenhang zwischen einer Kraft an der Waagschale und dem zugehörigen Spulenstrom beschreibt. Dieser wirksame Koppelfaktor ist eine Multiplikation des Koppelfaktors des Spule-Permanentmagnet-Systems (elektrodynamischer Aktor) mit dem vorhandenen Hebelverhältnis des Wägesystems bezüglich der Kraft auf die Waagschale und der Kraft auf das Spule-Permanentmagnet-System.

Mit der Kenntnis des wirksamen Koppelfaktors, ist somit der Zusammenhang zwischen der Geschwindigkeit der Waagschale und der resultierenden bewegungsinduzierten Spannung über Gleichung (1) gegeben. Dabei stellt die exakte Ermittlung der bewegungsinduzierten Spannung $U_{ind}$ die größte praktische Herausforderung dar, da die Spule in dieser Betrachtungsweise gleichzeitig als Sensor und als Aktor genutzt wird.

In der Druckschrift "Parameterization and optimization of EMC balances based on the frequency response of the impedance", F. Hilbrunner, H. Weiss, T. Fröhlich, Measurement, Special Section, 2012 wurde der Zusammenhang zwischen dem Spulenstrom und der resultierenden induzierten Spannung an der Spule hergeleitet.

Die Interaktionen zwischen dem Spulenstrom $I$, der resultierenden Kraft F, der resultierenden Bewegung der Waagschale $v_{WS}$ und der induzierten Spannung an der Spule $U_{ind}$, in Verbindung mit der mechanischen Impedanz $Z_m$ des Wägesystems ist in Fig. 2 veranschaulicht. Dabei ist zu erkennen, wie der Spulenstrom mittels des Koppelfaktors in die auf das mechanische System wirkende Kraft transformiert wird. Diese Kraft führt zu einer Bewegung (Geschwindigkeit) des mechanischen Systems. Die Geschwindigkeit der Bewegung erzeugt wiederum mittels des Koppelfaktors die gesuchte induzierte Spannung $U_{ind}$.

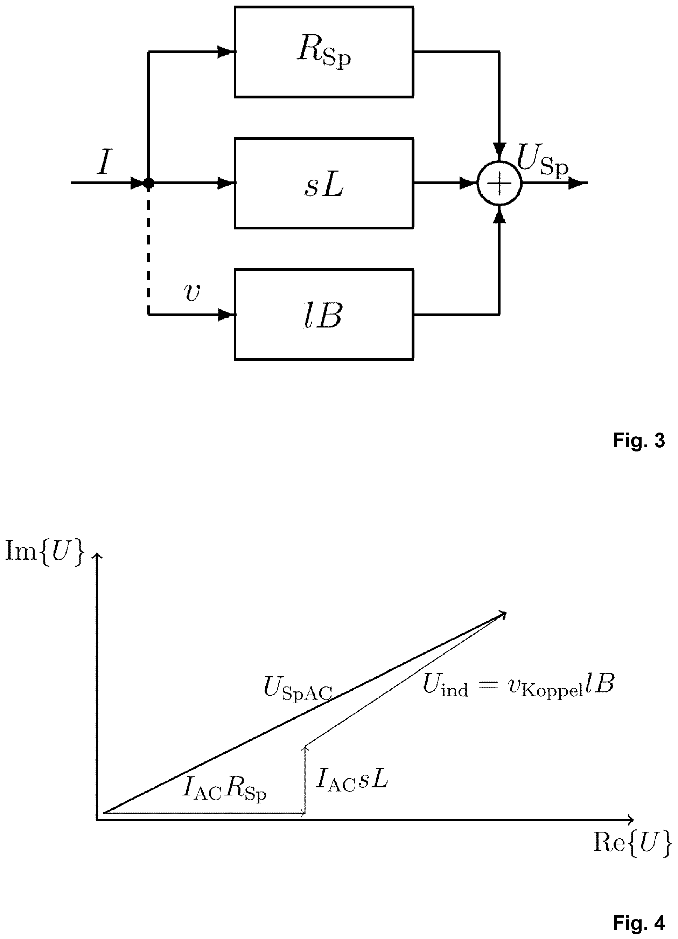

Unter Vernachlässigung der Ursache der Bewegung ergibt sich in Anlehnung an Fig. 6 aus der Druckschrift "Parameterization and optimization of EMC balances based on the frequency response of the impedance", F. Hilbrunner, H. Weiss, T. Fröhlich, Measurement, Special Section, 2012 die Spulenspannung $U_{Sp}$ aus den drei in Fig. 3 dargestellten Anteilen. Der erste Anteil beschreibt die aufgrund des ohmschen Widerstandes der Spule $R_{Sp}$ resultierende Spannung. Dieser Spannungsanteil besitzt exakt die gleiche Phasenlage wie der Spulenstrom oder die über den Messwiderstand $R_{Ref}$ gemessene Spannung als Maß für den gesuchten Spulenstrom. Ein zweiter frequenzabhängiger Spannungsanteil über der Spule resultiert aus deren Induktivität $L$. Dieser Spannungsanteil ist 90° phasenverschoben zum Spulenstrom. Der dritte Anteil ergibt sich aus dem bereits beschriebenen Zusammenhang zwischen der Bewegung der Spule und der dadurch induzierten Spannung.

Fig. 4 stellt die komplexe Wechselstromrechnung als Zeigerdiagramm dar. Diese Art der Darstellung ist dem Fachmann bekannt. Die Summation der drei Teilspannungen, zur Gesamtspannung $U_{SpAC}$ über der Spule, kann sehr anschaulich, als eine Addition von komplexen Zeigern betrachtet werden. Bei dieser Summation finden allerdings nur die Wechselanteile (AC) der erfassten Spannungssignale Berücksichtigung.

Mit der erfindungsgemäßen Lösung soll der Spannungsanteil $U_{ind}$ aufgrund der Bewegungsinduktion exakt ermittelt werden. Über die Anschlussdrähte der Spule ist es möglich, die Spule mit definierten Strömen zu beaufschlagen und die resultierenden Spannungssignale über der Spule zu erfassen. Im mechanischen Teilsystem steht ein optischer Lageindikator 7 zur Ermittlung der zugehörigen Lage des Waagenhebels 3 zur Verfügung. Das Ausgangsignal des Lageindikators $U_x$ ist ein Spannungssignal, welches mittels einer unbekannten nichtlinearen Kennlinie in die zugehörige Auslenkung $x_{WS}$ der Waagschale umgerechnet werden soll. Die möglichst exakte und rückführbare Ermittlung der statischen Kennlinie:

$$x_{WS} = f(U_x) \qquad (4)$$

stellt den Kernpunkt der Erfindung dar.

Die Spule des elektrodynamischen Aktors 8 in der EMK-Waage und der bewegliche Teil des Lageindikators befinden sich am Waagenhebel 3 und sind durch diesen steif miteinander verbunden. Somit kann davon ausgegangen werden, dass die Bewegung der Spule und das korrespondierende Ausgangssignal des Lageindikators die gleiche Phasenlage besitzen. Eine weitere wesentliche Voraussetzung für diese Annahme ist, dass auch die Elektronik des Lageindikators keine signifikanten Phasenverschiebungen erzeugt. Die zeitliche Ableitung des Ausgangssignals des Lageindikators ist ein Maß für die Geschwindigkeit des Waagenhebels und somit auch für die Geschwindigkeit der Spule. Mit der zeitlichen Ableitung des Ausgangssignals des Lageindikators ist demnach auch der Phasenwinkel $\varphi(U_{ind})$ der gesuchten bewegungsinduzierten Spannung $U_{ind}$ gegeben.

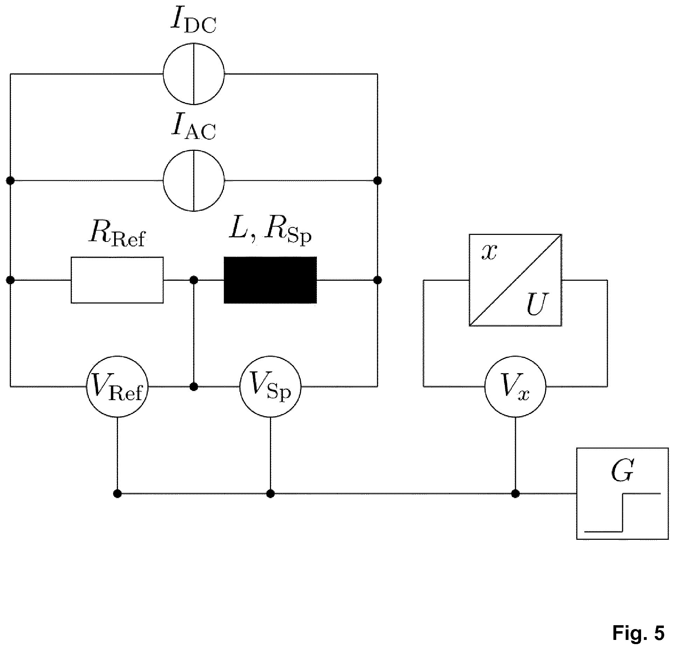

In Fig. 5 ist eine mögliche Messanordnung zur phasenrichtigen Erfassung der Spannungssignale dargestellt. Mittels eines Signalgenerators G (Rechteckgenerator) wird ein Referenztriggersignal erzeugt. Dieses Triggersignal veranlasst eine zeitgleiche Spannungsmessung mit den drei Voltmetern $V_{Ref}$, $V_{sp}$ und $V_x$. Weiterhin ist es wichtig, dass die Zeitbasis des Triggersignals hinreichend gut bekannt und stabil ist, da diese zur Berechnung der Geschwindigkeit benötigt wird. Hierfür wird eine Signalquelle zur zeitlich rückführbaren Taktung der Mess- und Regelabläufe in Form eines Taktgenerators zur Bereitstellung zeitlicher Impulse verwendet. Der Messwiderstand $R_{Ref}$ ist in der Fig. 5 bezeichnet.

Demnach können aus experimentellen Untersuchungen die folgenden Signale erfasst werden:

- $U_{Ref} = I * R_{Ref}$ (die über den Messwiderstand $R_{Ref}$ gemessene Spannung)
- $U_{Sp}$ (die Spannung über der Spule)

- $U_x$, und somit $\varphi(U_x)$ bezogen auf $U_{Ref}$, wobei die Ableitung von $U_x$ in Phase mit $U_{ind}$ ist.

Aus der Messung der Spannung über der Spule $U_{Sp}$ kann mit bekanntem Strom durch die Spule der ohmsche Widerstand der Spule $R_{Sp}$ ermittelt werden. Zu dieser Berechnung finden jedoch nur die Gleichanteile (DC) der Signale Verwendung.

$$R_{Sp} = U_{SpDC} / I_{DC} \qquad (5)$$

Aus diesen Informationen kann der gesuchte bewegungsinduzierte Spannungsanteil $U_{ind}$ aus den Wechselsignalen (AC) der Spannungsmessungen wie folgt berechnet werden:

$$Re\{U_{ind}\} = Re\{U_{SpAC}\} - I_{AC} {*} R_{Sp} \qquad (6)$$

$$Im\{U_{ind}\} = Re\{U_{ind}\} * \tan \varphi(U_{ind}) \qquad (7)$$

$$U_{ind} \qquad = Re\{U_{ind}\} + j * Im\{U_{ind}\} \qquad (8)$$

Dabei bezeichnen Re{} und Im{} die Real- und Imaginärteile der komplexen Wechselstrom- und Wechselspannungsanteile, sowie j eine imaginäre Zahl.

In der Praxis hat es sich als sehr günstig erwiesen, als Modulationssignal des Spulenstromes ein sinusförmiges Signal zu verwenden. Dadurch führt die Waagschale ebenso eine sinusförmige Bewegung aus. Zur Optimierung der Relation zwischen der bewegungsinduzierten Spannung $U_{ind}$ und den parasitären Spannungsanteilen der Spulenspannung, kann das mechanische System in seiner Eigenresonanz betrieben werden. Dadurch können mit geringen Modulationssignalen große Bewegungsamplituden erzielt werden. Unter diesem Gesichtspunkt besteht ebenso Optimierungspotential in Hinblick auf die mechanische Dämpfung des Wägesystems. Eine geringe mechanische Dämpfung führt zu einer ausgeprägten Resonanz und somit ebenso zu großen Bewegungsamplituden.

Mit der Kenntnis der induzierten Spannung $U_{ind}$ und des Koppelfaktors $B{*}L$ kann nach Gleichung (1) die Geschwindigkeit der Bewegung der Waagschale $v_{WS}$ ermittelt werden. Die zeitliche Integration der Geschwindigkeit liefert die zugehörige Wegänderung der Waagschale $x_{WS}$.

Abschließend kann aus der ermittelten Wegänderung der Waagschale $x_{WS}$ und der zugehörigen Ausgangsspannung des Lageindikators $U_x$ die statische Kennlinie ermittelt werden. Eine gute Approximation des Verlaufes ist beispielsweise durch ein Polynom möglich. Die Ordnung des Polynoms hängt hierbei von der Nichtlinearität des Lageindikators ab. In der folgenden Gleichung ist ein Beispiel für ein Polynom 3. Ordnung angegeben, wobei die Koeffizienten ai beispielsweise mittels linearer Regression ermittelt werden können.

$$x_{WS}(U_x) = a_0 + a_1 * U_x + a_2 * U_x^2 + a_3 * U_x^3 \qquad (9)$$

Mit der vorliegenden Erfindung kann eine rückführbare Kalibrierung der Bewegung der Waagschale $x_{WS}$ bezüglich der Kennlinie des Lageindikators, unabhängig vom Hebelverhältnis des Wägesystems realisiert werden, wobei das Messprinzip des Lageindikators unrelevant ist. Insbesondere können preiswerte nicht rückführbar kalibrierte Lageindikatoren verwendet werden und die Verwendung von Laserinterferometern vermieden werden.

Verwendung kann die erfindungsgemäße Lösung beispielsweise für eine kostengünstige KraftWeg-Messung finden. Auch dabei kann auf eine interferometrische Längenmessung verzichtet werden. Da Interferometer zu den hochpreisigen Geräten zählen, können somit die Gerätekosten für ein derartiges Wegkalibriersystem deutlich reduziert werden.

**Bezugszeichenliste**

1 Waagschale
2 Waagschalenhalter (Koppelstück)

3    Waagenhebel
4    Koppelband
5    Parallellenker
6    Hebellager
7    Lageindikator
8    elektrodynamischer Aktor (Spule-Permanentmagnet-System)
9    Justiergewicht mit Lastwechselvorrichtung
9a   Justiergewicht auf Waagschale

## Patentansprüche

**1.** Einrichtung zur automatischen Kalibrierung der Auslenkung der Waagschale (1) einer Waage mit elektromagnetischer Kraftkompensation (EMK-Waage) umfassend:

- die EMK-Waage, die eine Krafteinleitungseinheit mit Waagschale (1), ein Hebelsystem (2, 3, 4, 5, 6), einen elektrodynamischen Aktor (8) mit mindestens einer Spule und einem magnetfelderzeugenden System und einen Lageindikator (7) aufweist,
- einen Messwiderstand ($R_{Ref}$) zur Messung des Stromes durch die Spule des elektrodynamischen Aktors (8),
- ein Justiergewicht (9, 9a),
- eine Einrichtung zur Vorgabe elektrischer Ströme oder elektrischer Spannungen,
- einen Taktgenerator zur Bereitstellung zeitlicher Impulse,
- eine Einrichtung zur dreikanaligen simultanen Spannungsmessung, und
- eine Signalverarbeitungs- und Regeleinheit,

wobei die Einrichtung zur dreikanaligen simultanen Spannungsmessung dafür ausgebildet ist, die über die Spule des elektrodynamischen Aktors (8) abfallende Spannung $U_{Sp}$, die über dem Messwiderstand abfallende Spannung $U_{Ref}$ und die Ausgangsspannung des Lageindikators (7) $U_x$ zeitsynchron und in vorbestimmten Zeitintervallen zu erfassen und an die Signalverarbeitungs- und Regeleinheit zu übertragen.

**2.** Einrichtung nach Anspruch 1, **dadurch gekennzeichnet, dass** der Lageindikator (7) der EMK-Waage ein optisches oder kapazitives Wegmesssystem mit nichtlinearer Kennlinie ist.

**3.** Einrichtung nach einem der Ansprüche 1 oder 2, **dadurch gekennzeichnet, dass** der Taktgenerator zur Bereitstellung zeitlicher Impulse dafür ausgebildet ist, eine dreikanalige simultane Spannungsmessung in von der Signalverarbeitungs- und Regeleinheit vorgegebenen Zeitintervallen auszulösen.

**4.** Einrichtung nach einem der Ansprüche 1 bis 3, **dadurch gekennzeichnet, dass** die Vorrichtung zur Vorgabe elektrischer Ströme oder elektrischer Spannungen mindestens zweikanalig ausgebildet ist und mindestens ein erster Kanal differentielle Gleichsignale und mindestens ein zweiter Kanal differentielle Wechselsignale generiert.

**5.** Verfahren zur automatischen Kalibrierung der Auslenkung der Waagschale (1) einer Waage mit elektromagnetischer Kraftkompensation (EMK-Waage) mit den folgenden Schritten:

- Einstellung der Lage eines Hebelsystems (2, 3, 4, 5, 6) der EMK-Waage durch gezielte Bestromung mindestens einer Spule eines elektrodynamischen Aktors (8) derart, dass ein Lageindikator (7) ein stationäres Nullsignal ausgibt und der zugehörige stationäre Strom $I_{stat1}$ durch die Spule des elektrodynamischen Aktors (8) in einer Signalverarbeitungs- und Regeleinheit erfasst wird,
- Beaufschlagung der EMK-Waage mit einem Justiergewicht (9, 9a) und Einregelung der Lage des Hebelsystems (2, 3, 4, 5, 6) der EMK-Waage derart, dass der Lageindikator (7) ein stationäres Nullsignal ausgibt und der zugehörige stationäre Strom $I_{stat2}$ durch die Spule des elektrodynamischen Aktors (8) in der Signalverarbeitungs- und Regeleinheit erfasst wird,
- Ermittlung des Koppelfaktors des elektrodynamischen Aktors (8) zwischen dem Strom durch die Spule des elektrodynamischen Aktors (8) und der resultierenden Kraft an der Waagschale (1) der EMK-Waage aus den erfassten stationären Strömen $I_{stat1}$ und $I_{stat2}$, der Masse des Justiergewichts (9, 9a) $m_{just}$ und der lokalen Erdbeschleunigung,
- zeitlich veränderliche Auslenkung der in Nulllage eingeregelten unbelasteten EMK-Waage mit einem definierten Erregungssignal und zeitsynchrone Erfassung der über der Spule des elektrodynamischen Aktors (8) abfallenden Spannung $U_{Sp}$, der über einem Messwiderstand ($R_{Ref}$) zur Messung des Stromes durch die Spule des elektrodynamischen Aktors (8) abfallenden Spannung $U_{Ref}$ und der Ausgangsspannung des Lageindikators (7) $U_x$ in definierten Zeitintervallen, und

- Übermittlung der erfassten Spannungen $U_{Sp}$, $U_{Ref}$ und $U_x$ zur Signalverarbeitungs- und Regeleinheit und Ermittlung der Kennlinie der Auslenkung der Waagschale (1) der EMK-Waage in Abhängigkeit von der erfassten Ausgangsspannung des Lageindikators (7) $U_x$.

**6.** Verfahren nach Anspruch 5, **dadurch gekennzeichnet, dass** für die Ermittlung der Kennlinie der Auslenkung der Waagschale (1) der EMK-Waage in Abhängigkeit von der erfassten Ausgangsspannung des Lageindikators (7) Ux die in der mindestens einen Spule des elektrodynamischen Aktors (8) bewegungsinduzierte Spannung Uind durch phasenrichtige Zerlegung der erfassten Spannungen USp, URef und Ux bestimmt wird.

**7.** Verfahren nach Anspruch 5 oder 6, **dadurch gekennzeichnet, dass** die zeitlich veränderliche Auslenkung der Waagschale (1) der EMK-Waage durch mindestens ein harmonisches Signal mit definierter Frequenz und definierter Amplitude realisiert wird.

**8.** Verfahren nach Anspruch 7, **dadurch gekennzeichnet, dass** die Signale aus den Spannungsmessungen der harmonischen Auslenkung durch ein analytisches Modell approximiert werden, dass die Modellparameter Offset, Amplitude und Phasenlage ermittelt werden, wobei die Frequenz durch einen Taktgenerator zur Bereitstellung zeitlicher Impulse bekannt ist und alle weiteren Berechnungsschritte analytisch mit den ermittelten Modellparametern realisiert werden.

**9.** Verfahren nach Anspruch 5, **dadurch gekennzeichnet, dass** aus den erfassten Spannungen $U_{Sp}$, $U_{Ref}$ und $U_x$ der Impedanzfrequenzgang der EMK-Waage berechnet wird, durch ein parametrisches Modell des Impedanzfrequenzganges approximiert wird und aus dem parametrischen Modell die Kennlinie der Auslenkung der Waagschale (1) der EMK-Waage in Abhängigkeit von der erfassten Ausgangsspannung des Lageindikators (7) Ux ermittelt wird.

**Claims**

**1.** Device for automatically calibrating the deflection of a balance pan (1) of a balance having electromagnetic force compensation (EFC balance), comprising:

- the EFC balance, which has a force introduction unit having the balance pan (1), a lever system (2, 3, 4, 5, 6), an electrodynamic actuator (8) having at least one coil and a magnetic field generating system, and a position indicator (7),
- a measuring resistor ($R_{Ref}$) for measuring the current through the coil of the electrodynamic actuator (8),
- a calibration weight (9, 9a),
- a device for specifying electrical currents or electrical voltages,
- a clock generator for providing time pulses,
- a device for three-channel simultaneous voltage measurement, and
- a signal processing and control unit,

wherein the device for three-channel simultaneous voltage measurement is designed to detect the voltage $U_{Sp}$ dropping across the coil of the electrodynamic actuator (8), the voltage $U_{Ref}$ dropping across the measuring resistor and the output voltage of the position indicator (7) $U_x$ in a synchronous manner and at predetermined time intervals and transmit said detected voltages to the signal processing and control unit.

**2.** Device according to claim 1, **characterised in that** the position indicator (7) of the EFC balance is an optical or capacitive distance measuring system having a non-linear characteristic curve.

**3.** Device according to either claim 1 or claim 2, **characterised in that** the clock generator for providing time pulses is designed to trigger a three-channel simultaneous voltage measurement at time intervals specified by the signal processing and control unit.

**4.** Device according to any of claims 1 to 3, **characterised in that** the device for specifying electrical currents or electrical voltages has at least two channels, and at least one first channel generates differential DC signals and at least one second channel generates differential AC signals.

5. Method for automatically calibrating the deflection of the balance pan (1) of a balance having electromagnetic force compensation (EFC balance), comprising the following steps:

- setting the position of a lever system (2, 3, 4, 5, 6) of the EFC balance by selectively energising at least one coil of an electrodynamic actuator (8) in such a way that a position indicator (7) outputs a stationary zero signal and the associated stationary current $I_{stat1}$ through the coil of the electrodynamic actuator (8) is detected in a signal processing and control unit,
- applying a calibration weight (9, 9a) to the EFC balance and adjusting the position of the lever system (2, 3, 4, 5, 6) of the EFC balance in such a way that the position indicator (7) outputs a stationary zero signal and the associated stationary current $I_{stat2}$ through the coil of the electrodynamic actuator (8) is detected in the signal processing and control unit,
- determining the coupling factor of the electrodynamic actuator (8) between the current through the coil of the electrodynamic actuator (8) and the resulting force on the balance pan (1) of the EFC balance from the detected stationary currents $I_{stat1}$ and $I_{stat2}$, the mass of the calibration weight (9, 9a) $m_{just}$, and local gravitational acceleration,
- deflecting the unloaded EFC balance adjusted in the zero position, in a temporally variable manner, by means of a defined excitation signal, and synchronously detecting the voltage $U_{Sp}$ dropping across the coil of the electrodynamic actuator (8), the voltage $U_{Ref}$ dropping across a measuring resistor ($R_{Ref}$) for measuring the current through the coil of the electrodynamic actuator (8), and the output voltage of the position indicator (7) $U_x$ at defined time intervals, and
- transmitting the detected voltages $U_{Sp}$, $U_{Ref}$ and $U_x$ to the signal processing and control unit and determining the characteristic curve of the deflection of the balance pan (1) of the EFC balance on the basis of the detected output voltage of the position indicator (7) $U_x$.

6. Method according to claim 5, **characterised in that**, in order to determine the characteristic curve of the deflection of the balance pan (1) of the EFC balance on the basis of the detected output voltage of the position indicator (7) $U_x$, the movement-induced voltage $U_{ind}$ in the at least one coil of the electrodynamic actuator (8) is determined by in-phase decomposition of the detected voltages $U_{Sp}$, $U_{Ref}$ and $U_x$.

7. Method according to either claim 5 or claim 6, **characterised in that** the temporally variable deflection of the balance pan (1) of the EFC balance is brought about by means of at least one harmonic signal having a defined frequency and a defined amplitude.

8. Method according to claim 7, **characterised in that** the signals are approximated from the voltage measurements of the harmonic deflection by means of an analytical model, and **in that** the model parameters offset, amplitude and phase position are determined, the frequency being known by means of a clock generator for providing temporal pulses and it being possible for all further calculation steps to be implemented analytically using the determined model parameters.

9. Method according to claim 5, **characterised in that** the impedance frequency response of the EFC balance is calculated from the detected voltages $U_{Sp}$, $U_{Ref}$ and $U_x$, approximated by means of a parametric model of the impedance frequency response, and the characteristic curve of the deflection of the balance pan (1) of the EFC balance is determined from the parametric model on the basis of the detected output voltage of the position indicator (7) $U_x$.

**Revendications**

1. Dispositif d'étalonnage automatique du débattement du plateau (1) d'une balance à compensation électromagnétique de forces (balance CEF), le dispositif comprenant :

- la balance CEF qui comporte une unité d'application de force à plateau (1), un système de levier (2, 3, 4, 5, 6), un actionneur électrodynamique (8) comportant au moins une bobine et un système générateur de champ magnétique, et un indicateur de position (7),
- une résistance de mesure ($R_{Ref}$) pour la mesure du courant à travers la bobine de l'actionneur électrodynamique (8),
- un poids d'ajustage (9, 9a),
- un dispositif de préréglage de courants ou de tensions électriques,

- un générateur d'horloge pour la fourniture d'impulsions temporelles,
- un dispositif de mesure simultanée de tension à trois canaux, et
- une unité de traitement et de régulation de signaux,

le dispositif de mesure simultanée de tension à trois canaux étant conçu pour détecter la tension $U_{Sp}$ chutant à travers la bobine de l'actionneur électrodynamique (8), la tension $U_{Ref}$ chutant à travers la résistance de mesure et la tension de sortie de l'indicateur de position (7) $U_x$ de manière synchrone et à des intervalles de temps prédéfinis, et pour les transmettre à l'unité de traitement et de régulation de signaux.

2. Dispositif selon la revendication 1, **caractérisé en ce que** l'indicateur de position (7) de la balance CEF est un système de mesure de déplacement optique ou capacitif présentant une caractéristique non linéaire.

3. Dispositif selon l'une des revendications 1 ou 2, **caractérisé en ce que** le générateur d'horloge destiné à fournir des impulsions temporelles est conçu pour déclencher une mesure simultanée de tension à trois canaux à des intervalles de temps prédéfinis par l'unité de traitement et de régulation de signaux.

4. Dispositif selon l'une des revendications 1 à 3, **caractérisé en ce que** le dispositif de préréglage de courants électriques ou de tensions électriques est doté d'au moins deux canaux, et **en ce qu'**au moins un premier canal génère des signaux différentiels continus, et au moins un second canal génère des signaux différentiels alternatifs.

5. Procédé d'étalonnage automatique du débattement du plateau (1) d'une balance à compensation électromagnétique de forces (balance CEF), le procédé comportant les étapes suivantes :

- réglage de la position d'un système de levier (2, 3, 4, 5, 6) de la balance CEF par l'alimentation ciblée d'au moins une bobine d'un actionneur électrodynamique (8) de telle manière qu'un indicateur de position (7) émette un signal zéro fixe et que le courant fixe associé $I_{stat1}$ soit détecté par la bobine de l'actionneur électrodynamique (8) dans une unité de traitement et de régulation de signaux,
- application d'un poids d'ajustage (9, 9a) à la balance CEF, et réglage de la position du système de levier (2, 3, 4, 5, 6) de la balance CEF de telle manière que l'indicateur de position (7) émette un signal zéro fixe et que le courant fixe associé $I_{stat2}$ soit détecté par la bobine de l'actionneur électrodynamique (8) dans l'unité de traitement et de régulation de signaux,
- détermination du facteur de couplage de l'actionneur électrodynamique (8) entre le courant par la bobine de l'actionneur électrodynamique (8) et la force résultante sur le plateau (1) de la balance CEF à partir des courants fixes $I_{stat1}$ et $I_{stat2}$ détectés, de la masse du poids d'ajustage (9, 9a) $m_{just}$ et de l'accélération terrestre locale,
- débattement variable dans le temps de la balance CEF non chargée, laquelle balance est réglée en position zéro, à l'aide d'un signal d'excitation défini, et détection synchrone de la tension $U_{SP}$ chutant à travers la bobine de l'actionneur électrodynamique (8), de la tension $U_{Ref}$ chutant à travers une résistance de mesure ($R_{Ref}$) pour la mesure du courant par la bobine de l'actionneur électrodynamique (8) et de la tension de sortie de l'indicateur de position (7) $U_x$ à des intervalles de temps définis, et
- transmission des tensions $U_{Sp}$, $U_{Ref}$ et $U_x$ détectées à l'unité de traitement et de régulation de signaux, et détermination de la caractéristique du débattement du plateau (1) de la balance CEF en fonction de la tension de sortie détectée de l'indicateur de position (7) $U_x$.

6. Procédé selon la revendication 5, **caractérisé en ce que**, pour déterminer la caractéristique du débattement du plateau (1) de la balance CEF en fonction de la tension de sortie détectée de l'indicateur de position (7) $U_x$, la tension $U_{ind}$ induite par le mouvement dans l'au moins une bobine de l'actionneur électrodynamique (8) est déterminée par décomposition en phases des tensions $U_{Sp}$, $U_{Ref}$ et $U_x$ détectées.

7. Procédé selon la revendication 5 ou 6, **caractérisé en ce que** le débattement variable dans le temps du plateau (1) de la balance CEF est réalisé par au moins un signal harmonique présentant une fréquence définie et une amplitude définie.

8. Procédé selon la revendication 7, **caractérisé en ce que** les signaux provenant des mesures de tension du débattement harmonique sont approximés par un modèle analytique, **en ce que** les paramètres de modèle décalage, amplitude et position de phase sont déterminés, la fréquence étant connue par un générateur d'horloge pour fournir des impulsions temporelles, et toutes les autres étapes de calcul étant réalisées de manière analytique à l'aide des paramètres de modèle déterminés.

**9.** Procédé selon la revendication 5, **caractérisé en ce que** la réponse en fréquence d'impédance de la balance CEF est calculée à partir des tensions $U_{Sp}$, $U_{Ref}$ et $U_x$ détectées, est approximée par un modèle paramétrique de la réponse en fréquence d'impédance, et la caractéristique du débattement du plateau (1) de la balance CEF est déterminée à partir du modèle paramétrique en fonction de la tension de sortie détectée de l'indicateur de position (7) $U_x$.

**Fig. 1**

**Fig. 2**

**Fig. 3**

**Fig. 4**

**Fig. 5**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 865215 B
- US 4825968 A
- EP 0241649 A2
- DE 102011111238 A1
- DE 19960418 A1

**In der Beschreibung aufgeführte Nicht-Patentliteratur**

- **DIETHOLD, C. ; FRÖHLICH, T. ; HILBRUNNER, F. ; JÄGER, G.** High precision optical sensor for electromagnetic force compensated balances. *Proc. IMEKO TC3, TC5, TC22 Conf.,* 2010
- **PICARD, A.** The BIPM flexure-strip balance FB-2. *Metrologia,* 2004, vol. 41, 319-329
- **DIETHOLD.** Nanopositioning system with combined force measurement based on electromagnetic force compensated balances. *Proc. XX IMEKO World Congress,* 2012
- **F. HILBRUNNER ; H. WEISS ; T. FRÖHLICH.** Parameterization and optimization of EMC balances based on the frequency response of the impedance. *Measurement, Special Section,* 2012